# EUROPÄISCHE PATENTANMELDUNG

(11) **EP 0 574 105 A1**
(43) Veröffentlichungstag der Anmeldung: **15.12.1993**
(21) Anmeldenummer: 93250158.8
(22) Anmeldetag: 05.06.1993
(51) Int. Cl.: H04N 5/232

(54) **Modulares Steuersystem für eine Kamera**

(30) Priorität: 10.06.1992 DE 4219331
(71) Anmelder: ARNOLD & RICHTER CINE TECHNIK GMBH & CO. BETRIEBS KG., D-80701 München (DE)
(72) Erfinder: Smidek, Thomas, A-2544 Kottingbrunn (AT); Parizek, Wolfgang, A-2103 Langenzersdorf (AT); Tschida, Ernst, A-1130 Wien (AT); Bayerl, Eugen, 85551 Kirchheim (DE)
(74) Vertreter: Ninnemann, Detlef, Dipl.-Ing.

(57) **Zusammenfassung**

Die Erfindung betrifft ein Steuersystem für Kameras, insbesondere mit Motoreinheiten 4, 5, 6 zur Zoom-, Focus- und/oder Iris-Einstellung und mindestens einer mit der Motoreinheit bzw. den Motoreinheiten 4, 5, 6 elektrisch verbundenen Handbedieneinheit 1. Erfindungsgemäß ist in jeder Motoreinheit 4, 5, 6 ein Steuer- und Regelteil 36 mit einem Positionsgeber 33 integriert, sind an der Handbedieneinheit 1 sowohl Einstellwerte als auch Bereichsgrenzen analog und/oder elektronisch einstellbar, weist jede Motoreinheit 4, 5, 6 und die Handbedieneinheit 1 einen digitalen Dateneingang und Datenausgang auf und sind die Motoreinheiten 4, 5, 6 und die Handbedieneinheit 1 über einen seriellen Steuer- und Datenbus 8 miteinander verbunden. Ziel der Erfindung ist es, ein Steuersystem für Kameras zur Verfügung zu stellen, welches sich durch einen einfachen, modularen und erweiterbaren Aufbau auszeichnet.

## Beschreibung

Die Erfindung betrifft ein Steuersystem für eine Kamera nach dem Oberbegriff des Anspruchs 1.

Bei einer Laufbildkamera werden vor und während der Aufnahme eine Vielzahl von Parametern eingestellt und variiert, insbesondere die Aufnahmefrequenz, die Sektorenblendenöffnung, die Irisblendenöffnung, die Schärfe und die Brennweite.

Es ist bekannt, die beiden erstgenannten Parameter durch Ablaufprogramme, die die Blendenwinkel- und Aufnahmefrequenzeinstellung miteinander koppeln, aufeinander abzustimmen. Dadurch kann beispielsweise erreicht werden, daß trotz unterschiedlicher Beleuchtungsverhältnisse während eines Takes eine konstante Tiefenschärfe beibehalten wird. Der zeitliche Verlauf der Veränderung sowohl der Aufnahmefrequenz als auch der Sektorenöffnung wird dabei bevorzugt mittels eines Kamerakontrollgerätes programmiert und kontrolliert. Das Kamerakontrollgerät kontrolliert darüberhinaus weitere Kamerafunktionen wie die Koordination der einzelnen Kameramotoren, die Einstellung der Filmende-Vorwarnung, die Einstellung für den Rückwärtslauf und das Setzen von Zeitcodes und Userbits.

Die Einstellung der Irisblendenöffnung, der Schärfe und der Brennweite erfolgt an Objektivringen des Kameraobjektives. Zur einfacheren und zuverlässigeren Einstellung der Kameraobjektive werden dazu bevorzugt Bedienelemente verwendet, die entweder an der Kamera selber angebracht oder als Fernbedienungen realisiert sind.

Es ist bekannt, in Horizontallage an einem Kameraobjektiv eine oder mehrere Motoreinheiten anzuordnen, die jeweils über ein Zahnritzel ein Drehmoment auf den Zahnkranz eines Objektivringes übertragen und auf diese Weise eine Einstellung des Objektivringes bewirken. Die einzelnen Motoreinheiten sind dabei mit einer Kontrolleinheit verbunden, die wiederum über eine Handbedieneinheit gesteuert wird. Dieser Aufbau ist nachteilig mit einer aufwendigen Verkabelung der einzelnen Elemente verbunden, da jede Motoreinheit über ein separates Kabel mit der Kontrolleinheit und diese über separate Kabel mit einer Batterieeinheit sowie der Handbedieneinheit verbunden sind.

Die bekannten Steuersysteme für Kameraobjektive zeichnen sich allgemein durch eine inhärente Starrheit in Aufbau und Konzeption aus. So ist es bei diesen Systemen schwer möglich, die vorhandene Anordnung von Antriebs-, Kontroll- und Handbedieneinheiten durch Ankoppelung weiterer Einheiten wie etwa des Kamerakontrollgerätes oder durch das Einlesen und Umsetzen vorprogrammierter Einstellungen und Programmabläufe zu erweitern.

Die bekannten Steuersysteme stellen ein im wesentlichen geschlossenes Sytem dar, das den flexiblen Bedürfnissen moderner Kamera- und Aufnahmetechnik nicht gerecht wird.

Der Erfindung liegt die Aufgabe zu Grunde, ein Steuersystem für eine Kamera der eingangs genannten Gattung zur Verfügung zu stellen, welches sich durch einen einfachen, modularen und erweiterbaren Aufbau auszeichnet.

Diese Aufgabe wird erfindungsgemäß durch die kennzeichnenden Merkmale des Anspruchs 1 erfüllt.

Die erfindungsgemäße Lösung ermöglicht durch Verwendung einer Bus-Struktur, die die einzelnen Motoreinheiten und die Handbedieneinheit miteinander verbindet, einen modularen Aufbau des Steuersystems. Zusätzliche Motoreinheiten sowie Erweiterungseinheiten können problemlos über eine Schnittstelle an den Steuer- und Datenbus angeschlossen und auf diese Weise in das Steuersystem integriert werden. In vorteilhafter Weise werden die Sollwerte in Bezug auf Einstellwerte und Bereichsgrenzen zentral und damit übersichtlich an der Handbedieneinheit eingestellt.

Die Integration von Steuer- und Regelteil sowie des Positionsgebers in die Motoreinheit vereinfacht weiter den Aufbau des Steuersystems und ermöglicht ein einfaches Zuschalten bzw. Wegnehmen einzelner Motoreinheiten. Die Motoreinheiten sind auf Grund des integrierten Steuer- und Regelteils auch von anderen Systemeinheiten wie etwa einem zugeschalteten Steuerrechner direkt ansprechbar. Dadurch wird ein hohes Maß an Flexibilität erreicht.

In einer bevorzugten Ausführungsform der Erfindung ist an den Bus über eine Schnittstelle ein Stromversorungsmodul, vorzugsweise der Kamera-Akkumulator anschließbar. Auf Grund der Bus-Struktur wird durch Anschluß des Stromversorungsmoduls an eine Schnittstelle des Busses die Stromversorgung aller Einheiten des Steuersystems sichergestellt, wobei nur ein Batteriekabel benötigt.

Mit Vorteil ist die Handbedieneinheit mit einem Speichermodul zur Aufzeichnung von Einstellwerten für vorgebbare Kamera- und Objektivfunktionen wie Aufnahmefrequenz, Brennweite, Entfernung, Blende, Bereichsgrenzen und Skalierung und/oder Verstellverläufen der Frequenz-, Zoom-, Focus- und/oder Iris-Einstellungen verbindbar. In das Speichermodul können die Einsteilwerte und/oder Verstellverläufe eingelesen und aus dem Speichermodul aufgezeichnete oder mittels eines Rechners ermittelte Verläufe der Zoom-, Focus- und/oder Iris-Einstellungen für einen Wiedergabeablauf oder zur Wiederherstellung vorgemerkter Einstellungen ausgelesen werden.

Zum Einlesen der entsprechenden Werte werden die momentanen Frequenz-, Blenden- und Winkeleinstellungen der Objektivringe für Zoom, Focus und Iris von den jeweiligen Steuer- und Regelteilen der Motoreinheiten erfaßt und über den Bus und die Handbedieneinheit in das Speichermodul eingelesen. Bei Wiedergabe der aufgezeichneten Einstellungen und Verläufe werden die Kameraeinstellungen und Objektivringe bei hoher Wiederholgenauigkeit der zeitlichen Abfolge und der eingestellten Drehwinkel in die entsprechenden Winkelstellungen gefahren.

Die Verwendung von Speichermodulen ermöglicht es, die Anfangs- und Endeinstellungen und den zeitlichen Ablauf eines Takes in Bezug auf Bildfrequenz, Brennweite, Entfernung, Sektoröffnung und Blende aufzuzeichnen und beliebig zu wiederholen. Dies erleichtert in erheblichem Maße die Arbeit des Kameramannes bei der Aufnahme eines Takes, da Fehler bei der Einstellung der Aufnahmeparameter mit Sicherheit ausgeschlossen werden können.

In einer bevorzugten Ausführungsform weist das Speichermodul eine Steckaufnahme zur Aufnahme einer als Speichermedium dienenden Speicherkarte auf. Für die Aufzeichnung und Wiedergabe verschiedener Szenen werden verschiedene Speicherkarten verwendet, die jeweils in das Speichermodul eingesetzt werden.

In einer weiteren vorteilhaften Ausgestaltung der Erfindung weist der Bus eine oder mehrere Schnittstellen zum Anschluß eines Steuerrechners und/oder von Erweiterungseinheiten für Belichtungsprogramme auf. Dadurch können der Steuerrechner bzw. die Erweiterungseinheiten nach Bedarf in das Steuersystem integriert werden.

Der Steuerrechner kann ebenso wie die Handbedieneinheit die Motoreinheiten kontrollieren und Sollwerte an die Motoreinheiten abgeben. Dabei kann die Handbedieneinheit trotzdem angeschlossen sein und damit die Einstellung der Ausgangswerte bei Steuerrechner-Betrieb erleichtern.

Weiter können mittels des Steuerrechners ebenso wie mit den Speichermodulen aufgezeichnete und gegebenenfalls modifizierte oder mittels eines Rechners ermittelte Verläufe der Bildfreuenz-, Blenden-, Zoom-, Focus- und/oder Iris-Einstellungen für einen Wiedergabeablauf oder zur Wiederherstellung vorgemerkter Einstellungen an die Motoreinheiten abgegeben werden.

Die Verbindung zwischen den eigentlichen Kamerafunktionen wie Bildfrequenz und Blendeneinstellung zu den Objektivfunktionen (Zoom, Irisblende, Focus und dgl.) kann in verschiedenartiger Weise erfolgen. Eine Möglichkeit ist die Anordnung einer übergeordneten Steuerung und Regelung, eine andere Möglichkeit das Vorsehen einer Koppeleinheit zwischen der Steuereinheit für die Kamerafunktionen und der Steuereinheit für die Objektivfunktionen. Bei einer Koppeleinheit zwischen der Kamera und dem Steuersystem für Kameraobjektive zur Einbeziehung der Kamera-Laufgeschwindigkeit und des Blendensektors einer verstellbaren Umlaufblende der Kamera in die Objektivsteuerung kann wahlweise auch der Steuerrechner als übergeordnetes Kontroll- und Bediengerät vorgesehen werden.

In diesem Falle ermöglicht die Koppeleinheit einen Informationsaustausch zwischen dem Steuersystem für die Kamera und dem Steuersystem für die Kameraobjektive und fügt diese zu einem Gesamtsystem zusammen. Damit ist eine beliebig und mit höchster Genauigkeit reproduzierbare Verknüpfung der Kamerafunktionen mit den Objektivfunktionen bei der Einstellung der Aufnahmeparameter insbesondere der Laufgeschwindigkeit und des Blendensektors der verstellbaren Umlaufblende einer Laufbildkamera möglich.

Dadurch sind neue kreative Effekte möglich, etwa die Variation der Schärfentiefe bei konstanten Lichtverhältnissen durch Kopplung der Irisblende und der verstellbaren Umlaufblende. Bisher war es dagegen lediglich möglich, die Kamera-Laufgeschwindigkeit und den Blendensektor der Umlaufblende oder die Kamera-Laufgeschwindigkeit und die Irisblende zu koordinieren.

Über den Steuerrechner oder Speichermodule können des weiteren aufgezeichnete oder mittels eines Rechners ermittelte Ablaufprogramme betreffend die zeitliche Veränderung der Laufgeschwindigkeit und des Blendensektors der Umlaufblende an die Koppeleinheit abgegeben und von dieser an das Kamerakontrollgerät bzw. die Kamera geleitet werden.

Weitere mögliche Erweiterungseinheiten sind eine Anzeigeeinheit zur Anzeige aktueller Einstellwerte und/oder Bereichsgrenzen in alphanumerischer oder Bar-Graph-Form und eine Video-Dateneinblendeinheit zur Darstellung aktueller Einstellwerte auf einem Sucher-Monitorbild.

Mit besonderem Vorteil besteht die Handbedieneinheit aus einer Zoom-Haupteinheit zur steuerbaren Brennweitenveränderung über einen großen Geschwindigkeitsbereich mit Vorwahl des Geschwindigkeitsbereiches und Kalibrierfunktion sowie Focus-/Iris-Modulen zur Positionierung des Schärfen-/Blenden-Ringes mit automatisch ablaufenden Kalibrierfunktionen und Bereichseingrenzungen. Der modulare Aufbau der Handbedieneinheit gewährleitet ein hohes Maß an Flexibilität und Anpassungsfähigkeit der Handbedieneinheit an die Aufnahmeerfordernisse.

Es liegt dabei im Rahmen der Erfindung, daß alternativ die Focus-/Iris-Einheiten als Haupteinheiten ausgebildet sind und die Zoom-Einheit als Nebeneinheit vorgesehen ist.

In einer bevorzugten Ausführungsform sind die Focus-/Iris-Module als Handradeinheiten mit jeweils einem Handrad mit abnehmbaren Skalenscheiben und verschiebbaren Endanschlägen ausgebildet. Die Handräder sind dabei ähnlich wie bei einer mechanischen Schärfenzieheinrichtung ausgeführt. Die Focus-/Iris-Module werden wahlweise über Erweiterungsstekker an die Zoom-Haupteinheit angesteckt oder über ein Kabel an diese angeschlossen. Der Anschluß über Kabel ermöglicht, daß gleichzeitig mehrere Assistenten ohne gegenseitige Behinderung die Zoom-Haupteinheit und die Focus-/Iris-Module bedienen können.

In einer weiteren bevorzugten Ausführungsform des erfindungsgemäßen Steuersystems weist die Handbedieneinheit bzw. ein übergeordnetes Kontroll- und Bediengerät eine Funktion auf, durch welche bei Stillstand der Kamera der Objektivring für die Iris-Einstellung derart positioniert wird, daß die Irisblende vollständig geöffnet ist.

Dazu wird ein entsprechendes Steuersignal an die Motoreinheit zur Iris-Einstellung abgegeben. Dieses Steuersignal wird zum einen automatisch bei Stoppen der Kamera abgegeben und ist zusätzlich durch Betätigung eines entsprechenden Bedienungselementes wahlweise aktivierbar.

Auf diese Weise wird erreicht, daß die Irisblende bei Stillstand der Kamera zunächst offen ist. Die offene Irisblende ermöglicht ein genaues Einstellen der Schärfentiefe, die bei offener Blende minimal ist. Durch entsprechende Verstellung des Objektivringes zur Focus-Einstellung wird das scharfzustellende Objekt fokussiert, so daß dieses im Sucher als scharfes und - aufgrund der offenen Blende - helles Sucherbild abgebildet wird. Die Helligkeit des Sucherbildes erleichtert dabei den Fokussiervorgang.

Die gewünschte Schärfentiefe kann nun durch Verstellen der Irisblende eingestellt werden, wobei sichergestellt ist, daß das scharfzustellende Objekt optimal fokussiert ist. In die Wahl der Irisblende fließen insbesondere gestalterische und kreative Aspekte ein.

Bei Einschalten der Kamera wird die Irisblende auf die vorgewählte Arbeitsblende eingestellt. Das Öffnen der Irisblende bei Kamerastillstand entspricht der Verwendung einer Springblende.

Bei der Aufzeichnung von Verstellverläufen wird der eingestellte Wert für die Arbeitsblende abgespeichert und die Abfolge von Öffnen der Blende, Scharfstellen, Wahl der Irisblende und Abspeichern des gewählten Irisblendenwertes wiederholt sich für die folgende Kameraeinstellung. Die abgespeicherten Werte bzw. der ermittelte Verstellverlauf für die Iris-Einstellung werden zusammen mit den ermittelten Verstellverläufen für Zoom, Focus, Bildfrequenz und Sektorenblendenöffnung in einem Speichermodul oder einem Steuerrechner aufgezeichnet und die gespeicherten Werte bei einem Wiedergabeablauf angefahren.

Weitere vorteilhafte Weiterbildungen des erfindungemäßen Steuersystems sind in den verbleibenden Unteransprüchen gekennzeichnet.

Die Erfindung soll nachfolgend unter Bezugnahme auf die Zeichnungen an mehreren Ausführungsbeispielen näher erläutert werden.

Es zeigen
- Figur 1: eine schematische Anordnung der Einheiten eines Steuersystems für Kameraobjektive,

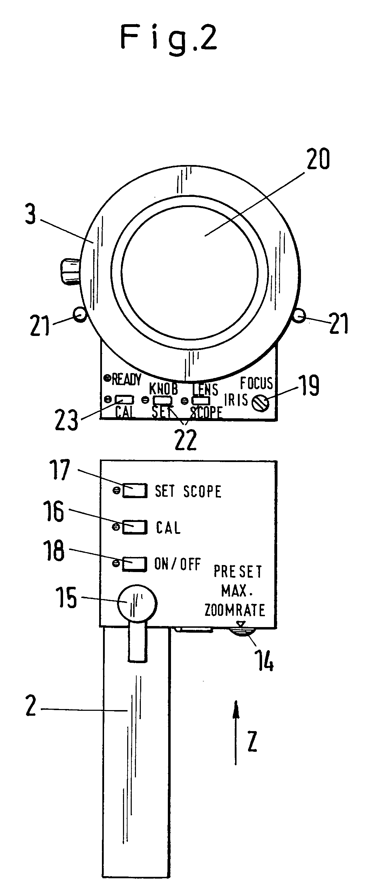

- Figur 2: eine schematische Draufsicht auf eine Zoom-Haupteinheit und ein Focus-/Iris-Modul,
- Figur 3: ein Blockschaltbild einer Handbedieneinheit,
- Figur 4: eine schematische Anordnung der Zoom-Haupteinheit mit zwei angeschlossenen Handradeinheiten und den Motoreinheiten,
- Figus 5: ein Blockschaltbild einer Motoreinheit und
- Figur 6: eine schematische Darstellung eines Steuersystems für Kameraobjektive mit Speichermodul, Steuerrechner und Koppeleinheit zur Kamera.

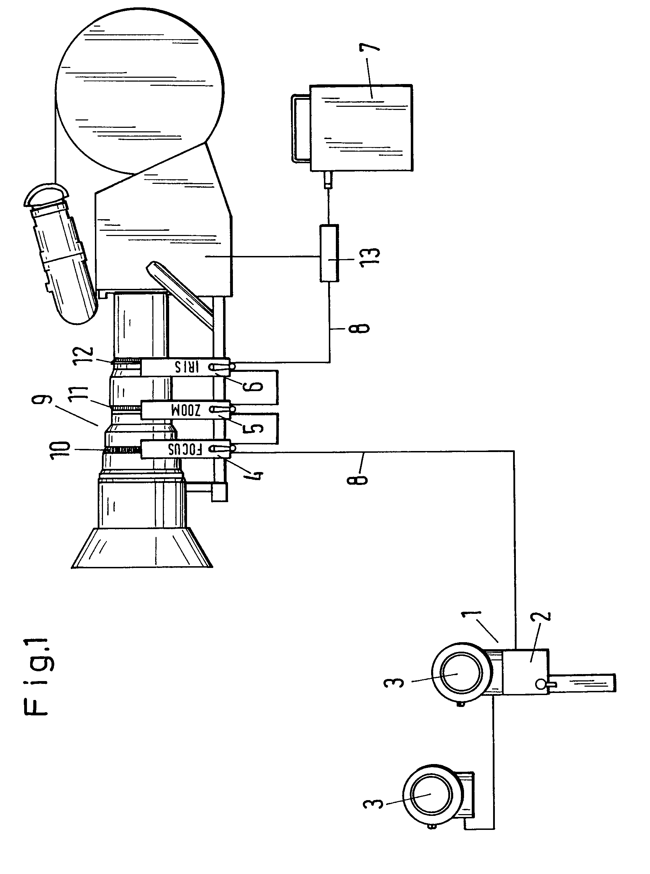

In Figur 1 ist schematisch ein Steuersystem für Kameraobjektive dargestellt, das sich aus einer Handbedieneinheit 1 mit einer Zoom-Haupteinheit 2 und zwei Focus-/ Iris-Modulen 3, einer Motoreinheit 4 zur Focus-Einstellung, einer Motoreinheit 5 zur Zoom-Einstellung, einer Motoreinheit 6 zur Iris-Einstellung und einem Kamera-Akkumulator 7 zusammensetzt. Die Handbedieneinheit 1, die Motoreinheiten 4, 5, 6 und das Stromversorgungsmodul 7 sind in Reihe angeordnet und über einen seriellen Steuer- und Datenbus 8 miteinander verbunden.

Der Kamera-Akkumulatur 7 ist über eine Schnittstelle an den Bus 8 angeschlossen und versorgt neben der Kamera sämtliche Einheiten des Steuersystems, d.h. die Handbedieneinheit 1, die Motoreinheiten 4, 5, 6 sowie gegebenenfalls angeschlossene Erweiterungseinheiten mit Strom. Dazu ist eine Steuerleitung vorgesehen, über die die Stromversorgung aller Einheiten des Steuersystems von der Handbedieneinheit 1 aus geschaltet wird.

Mit einem von der Handbedieneinheit 1 gesteuerten Versorgungsmodul 13 wird die Stromzufuhr der Kamera geregelt, so daß der Kameralauf von der Handbedieneinheit 1 aus in Betrieb genommen werden kann.

Die Motoreinheiten 4, 5, 6 übertragen zur Zoom-, Focus- und Iris-Einstellung über Ritzel jeweils ein Drehmoment auf die entsprechenden Objektivringe 10, 11, 12 des Kameraobjektives 9. Dazu erhalten sie aufgezeichnete oder an der Handbedieneinheit 1 eingestellte und über den LCU-Bus 8 übertragene Sollwerte.

Zur Erhöhung der Störsicherheit der Datenübertragung sind die über den Bus 8 übertragenen Daten datenredundant kodiert. Dazu sind in den einzelnenen Einheiten des Steuersystems Kodier- und Dekodierelemente vorgesehen.

Die Zoom-Haupteinheit 2 gibt über den Bus 8 Steuersignale an die Motoreinheit 5 betreffend die Anfangs- und Endwerte der Brennweite sowie der Zoomgeschwindigkeit, mit der eine Brennweitenveränderung erfolgen soll. Dazu weist die Zoom-Haupteinheit 2 ein Bedienelement 14 zur Vorwahl des Geschwindigkeitsbereiches und ein selbstrückstellendes Zoom-Geschwindigkeitsstellelement 15 auf, mit welchem die Zoomgeschwindigkeit in einem logarithmischen Bereich zwischen einer Zoomgeschwindigkeit von Null und einer maximalen Zoomgeschwindigkeit ruckfrei steuerbar ist. Die Zoomrate kann über einen großen Geschwindigkeitsbereich zwischen 1/2 Umdrehung pro Sekunde und 1/300 Umdrehung pro Sekunde variiert werden.

Die Endanschläge des Zoom-Objektivringes werden automatisch kalibriert. Dazu sind automatisch ablaufende Kalibrierfunktionen vorgesehen, die durch Betätigen des Bedienelementes 16 aktiviert werden. Außerdem kann der Bereich, über den die Brennweite veränderbar ist, elektronisch eingegrenzt werden. Dazu ist an der Zoom-Haupteinheit ein Bedienelement 17 vorgesehen. Auf diese Weise ist es möglich, auch kleine Brennweitenveränderungen mit höchster Präzision zu steuern, da der volle Gang des Zoom-Geschwindigkeitsstellelementes 15 für den nur geringen Brennweitenbereich zur Verfügung steht. Ein weiteres Bedienelement 18 betätigt über das Versorgungsmodul 13 den Kameralauf.

An die Zoom-Haupteinheit 2 können die Focus-/Iris-Module 3 über einen Erweiterungsstecker angesteckt oder über Kabel angeschlossen werden. Die Focus-/Iris-Module 3 geben Steuersignale an die Motoreinheiten 4 bzw. 6 betreffend die Positionierung und die Bereichseingrenzungen des Schärfen-/Blendenringes. Jedes Focus-/Iris-Modul 3 ist dabei wahlweise zur Focus- oder Iris-Steuerung verwendbar. Der entsprechende Modus wird mittels eines Schalters 19 am Focus-/Iris-Modul eingestellt.

Die Focus-/Iris-Module 3 sind als Handradeinheiten mit jeweils einem Handrad 20 ausgebildet. Das Handrad 20 ist dabei ähnlich wie bei einer mechanischen Schärfenzieheinrichtung mit abnehmbaren Skalenscheiben und verschiebbaren, mechanisch justierbaren Endanschlägen 21 ausgebildet. Mittels der verschiebbaren Endanschläge 21 kann der Anwender bestimmte Eckwerte seiner Verstellung einstellen. Dafür ist es ebenfalls denkbar, daß zusätzlich oder alternativ eigene Markierungen auf den Skalenscheiben angebracht werden.

Zur präzisen Einstellung des Schärfen-/Blendenringes 10, 12 sind Bedienelemente 22 zur elektronischen Einstellung und Eingrenzung des Bereiches vorgesehen, über den die Schärfe/Blende verändert werden kann. Auf diese Weise kann der Verstellbereich beliebig eingegrenzt werden. Für den eingegrenzten Bereich steht jedoch der volle Drehbereich des Handrades 20 innerhalb der eingestellten Handrad-Endanschläge 21 zur Verfügung, so daß die Einstellung des Schärfen-/Blendenringes äußerst präzise erfolgen kann. Dies entspricht der bei mechanischen Schärfenzieheinrichtungen vorgesehenen Untersetzung für besonders feinfühliges Regeln.

Weiter wird durch die Bereichseingrenzung der Schärfen-/Blenden-Einstellung ermöglicht, den Schärfen-/Blendenring 10, 12 exakt und wiederholgenau auf die durch die Bereichsgrenzen definierten Einstellwerte zu positionieren. Bei der Wiederholung von Aufnahmeszenen kann daher mit definierten Anfangs- und Endbedingungen gearbeitet werden.

Die Bereichseingrenzung kann wahlweise am Handrad 20 oder durch Kommunikation über den Bus 8 mit den entsprechenden Motoreinheiten 4, 6 an den Schärfen-/Blendenringen 10, 12 selber eingestellt werden. Zusätzlich erfolgt bei Betätigung des Bedienungselementes 23 eine automatisch ablaufende Kalibrierung bezüglich der Endanschläge des Schärfen-/ Blendenringes 10, 12 zur Schonung der Objektivanschläge.

Sowohl Zoom-Haupteinheit 2 als auch Focus-/Iris-Module 3 weisen elektronische Anzeigen zur Anzeige der Sollwerte für die Motoreinheiten 4, 5, 6 der aktuellen Bereichsgrenzen und des Betriebsstatus auf.

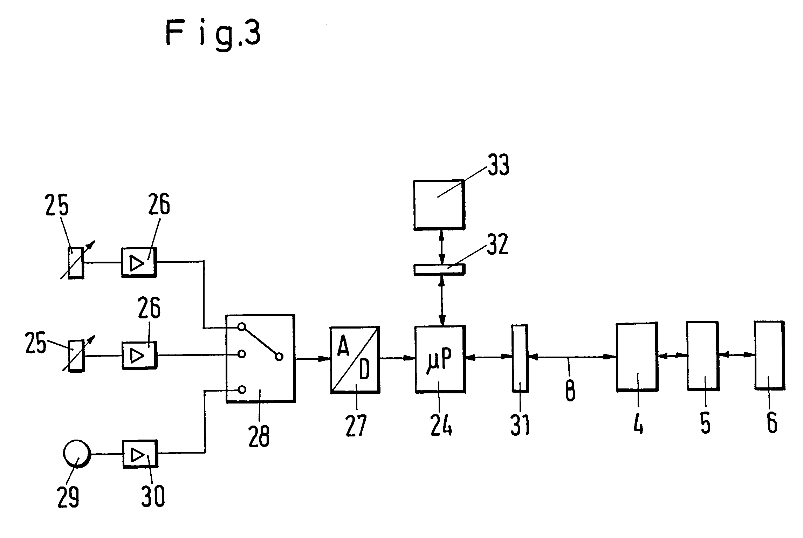

In die Zoom-Haupteinheit 2 ist ein Mikroprozessor 24 integriert, der gemäß Figur 3 von der Zoom-Haupteinheit 2 und den Focus-/Iris-Modulen 3 Sollwerte für die Zoom-, Focus- und Blendeneinstellung sowie die Bereichsgrenzen einliest und der die Kommunikation mit den Motoreinheiten 4, 5, 6 und gegebenenfalls vorhandenen Erweiterungseinheiten sowie die Signalisierung der Betriebsfunktionen übernimmt.

Jedes Handrad 20 ist mit einem Handradwinkelgeber, vorzugsweise einem Potentiometer 25 verbunden, der ein der Stellung des Handrades 20 entsprechendes Signal über einen Verstärker 26 und einen Analog/Digital-Wandler 27 mit gemultiplextem Eingang 28 an den Mikroprozessor 24 abgibt. Das Zoom-Geschwindigkeitsstellelement 15 weist einen als Geberelement dienenden berührungslosen Abstandssensor 29 auf, der ein zur Auslenkung des Zoom-Geschwindigkeitsstellelementes proportionales Signal abgibt, welches über einen Verstärker 30 und den Analog/Digital-Wandler 27 vom Mikroprozessor 24 eingelesen wird. Der Mikroprozessor 24 berechnet aus diesen Signalen digitale Sollwerte für die Zoom-, Focus- und Iriseinstellungen und sendet die digitalen Sollwerte über eine serielle Schnittstelle 31 an den Bus 8 und zu den einzelnenen Motoreinheiten 4, 5, 6.

Der Mikroprozessor 24 ist des weiteren über nicht dargestellte Anschlüsse mit den Bedienelementen der Handbedieneinheit 1 für die Bereichseingrenzung und die Kalibrierfunktionen sowie die Wahl des Geschwindigkeitsbereiches verbunden.

Das über die Schnittstelle 32 mit dem Mikroprozessor 24 verbundene Speichermodul 33 ist weiter unten erläutert.

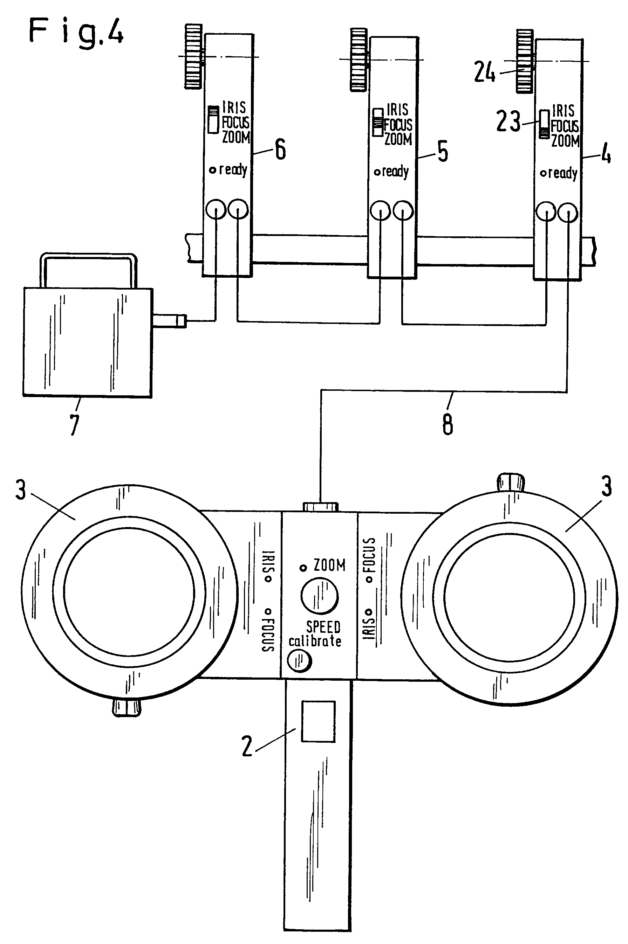

Die Motoreinheiten 4, 5, 6 sind gemäß Figur 1 vertikal zur Längsachse des Kameraobjektives 9 angeordnet und können daher auch bei Objektiven mit sehr kurzer Baulänge zusammen mit einem Produktionskompendium verwendet werden. Sie sind wahlweise für die Zoom,- Focus- oder Iriskontrolle verwendbar, wobei der entsprechende Modus gemäß Figur 4 an einem Schalter 32 an der Motoreinheit einstellbar ist.

Die einzelnen Motoreinheiten 4, 5, 6 sind mittels eines Klemmmechanismus an den Kompendiumsstangen des Produktionskompendiums befestigt und über ein arretierbares Gelenk in den Zahnkranz des jeweiligen Objektivringes 10, 11, 12 einschwenkbar. Die Drehmomentübertragung auf den Objektivring erfolgt über ein Zahnritzel 24 der Motoreinheit 4, 5, 6. Die Stellung des Objektivringes 10, 11, 12 ist auf Grund der Kalibrierung der Objektivendausschläge exakt in die entsprechende Einstellung für die Schärfe bzw. Brennweite bzw. Blende umrechenbar.

In jede Motoreinheit 4, 5, 6 ist neben einem Antriebsmotor 32 ein Steuer- und Regelteil zur Regelung des Antriebsmotors und zur Kommunikation mit der Handbedieneinheit 1 und/oder Erweiterungseinheiten sowie ein Positionsgeber 33 integriert. Als Antriebsmotor 32 findet insbesondere ein geräuscharmer Gleichstrommotor Verwendung. Der Steuer- und Regelteil ist über eine serielle Schnittstelle mit dem Bus 8 verbunden.

In einer alternativen Ausgestaltung des Ausführungsbeispiels weist eine Motoreinheit 4, 5, 6 zusätzlich zum Positionsgeber 33 einen Geschwindigkeitsgeber auf. Es ist ebenfalls denkbar, daß der Geschwindigkeitsgeber an Stelle des Positionsgebers 33 vorgesehen ist. Der Geschwindigkeitsgeber wird dabei insbesondere bei der Zoom-Einstellung eingesetzt.

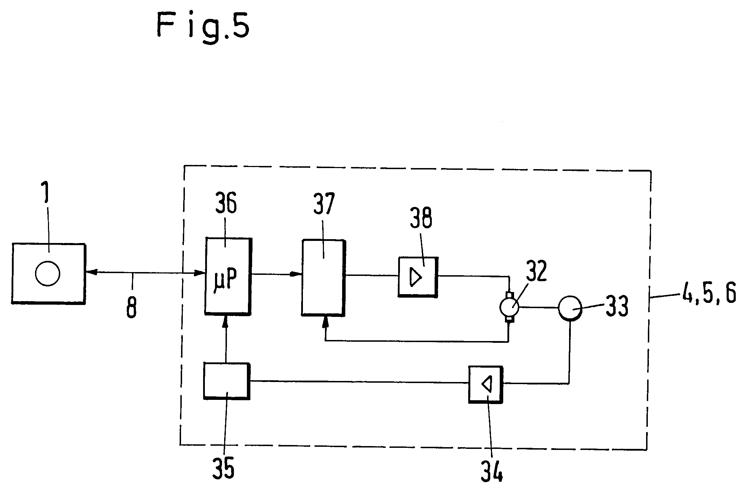

In der in Figur 5 dargestellten Anordnung ist ein Antriebsmotor 32 vorgesehen, der über ein Getriebe mit der Antriebwelle eines Zahnritzels 24 zum Einstellen eines Objektivringes 10, 11, 12 verbunden ist. Die Antriebswelle des Zahnritzels ist fest mit dem Positionsgeber 33 verbunden, der die exakte Position des Zahnritzels erfaßt. Da die Bereichsgrenzen des Objektivringes 10, 11, 12 definiert eingestellt sind, wird damit auch die exakte Position des Objektivringes 10, 11, 12 erfaßt. Als Positionsgeber 33 wird insbesondere ein Inkrementalgeber verwendet.

Der Positionsgeber 33 ist über einen Verstärker 34 mit einem Positionszähler 35 verbunden, der die Signale des Positionsgebers 33 auswertet. Dazu werden ausgehend von einer bekannten Ausgangsposition des Objektivringes 10, 11, 12 die Drehungen des Objektivringes 10, 11, 12 entsprechend addiert bzw. subtrahiert, so daß der Stellweg und die Position exakt erfaßt und verarbeitet werden können. Der ermittelte Istwert der Stellung des Objektivringes 10, 11, 12 wird vom Positionszähler 35 einem Mikroprozessor 36 zugeleitet.

Gleichzeitig wird der Mikroprozessor 36 über eine serielle Schnittstelle mit den über den Bus 8 übertragenen Sollwerten für die Stellung des Objektivringes 10, 11, 12 beaufschlagt. Der Mikroprozessor 36 vergleicht die Istwerte mit den Sollwerten und gibt entsprechend an einen Positionsregler 37 ein Steuersignal ab. Der Positionsregler 37 steuert über einen Verstärker 38 die Welle des Antriebsmotors 32 an.

Der Mikroprozessor 36 überwacht dabei, daß der Antriebsmotor 32 im Bereich der Objektivanschläge abgebremst und unmittelbar vor den Objektivanschlägen zur Schonung der Objektivanschläge abgeschaltet wird. Auch erfolgt eine mechanische und elektronische Begrenzung des Drehmomentes auf den jeweiligen Zahnkranz. Dadurch werden extreme Belastungen der Antriebsmotors 32 und des Objektivzahnkranzes verhindert. Durch Überwachung der Temperatur der Antriebsmotore 32 kann eine Wärmeüberlastung der Motoren 32 ausgeschlossen werden.

Der Mikroprozessor 36 wird mit den aktuellen Sollwerten der Handbedieneinheit 1 beaufschlagt. Die in den Mikroprozessor 36 eingelesenen Daten enthalten dabei bei der Focus- oder Iris-Einstellung vorzugsweise Positionssollwerte für den entsprechenden Objektivring 10, 11, 12 sowie Werte betreffend die Bereichseingrenzung. Zur Zoom-Einstellung werden vorzugsweise Anfangs- und Endwerte der Brennweite übertragen und die aktuelle Geschwindigkeit, mit der die Veränderung vorgenommen werden soll. Dabei kann die Brennweite mit konstanter oder variierender Geschwindigkeit geändert werden.

Ergänzend oder alternativ können auch vorprogrammierte oder aufgezeichnete Sollwerte mittels eines Steuerrechners in den Mikroprozessor 36 eingelesen werden, der über eine Schnittstelle an den Bus 8 angeschlossen ist.

Die Motoreinheit 4, 5, 6 ist von der Software als "Bus-Slave" konfiguriert und kann auch von der Handbedieneinheit 1 und dem Steuerrechner gleichzeitig angesprochen werden. Dies ist insbesondere beim Betrieb mit einem Steuerrechner 39 wichtig, wenn die Einstellung der Bereichsgrenzen und die Kalibrierfunktionen mittels der Handbedieneinheit 1 erfolgen.

Der Mikroprozessor 36 jeder Motoreinheit 4, 5, 6 überträgt über den Bus 8 die Istwerte der Objektiveinstellungen sowie gegebenenfalls Statusdaten an die Handbedieneinheit 1 bzw. einen Steuerrechner. Die Übertragung der Istwerte ist beispielsweise von Bedeutung, wenn die Einstellung der Bereichsgrenzen an der Zoom-Haupteinheit 2 und den Focus-/Iris-Modulen 3 direkt am Kameraobjektiv 9 durchgeführt wird. Weiter ist die Übertragung der Istwerte notwendig zur Aufzeichnung von Einstellwerten und/oder Verstellverläufen in einen Steuerrechner 39 oder ein Speichermodul 33.

In einem Ausführungsbeispiel für Kameraobjektive 9, die mit Bar-Code-Marken versehen sind, wird die Information über die Stellung des Objektivringes 10, 11, 12 nicht in Winkelgeraden, sondern direkt in der zugehörigen Skaleneinheit, beispielsweise Meter, ausgegeben, um Unterschiede der Skalengravur zu berücksichtigen. Zum Erfassen der Bar-Code-Marken ist bei diesem Ausführungsbeispiel eine Leseeinheit am Objektiv befestigt und über ein Kabel mit der entsprechenden Motoreinheit 4, 5, 6 verbunden. Die Vorgabe der aktuellen Einstellwerte für Entfernung, Iris und Brennweite in den jeweiligen Einheiten kann dabei nicht nur in analoger Weise über das Handrad erfolgen, sondern wird bevorzugt vom Steuerrechner 39 oder über eine digitale Eingabe an der Handbedieneinheit 1 vorgegeben.

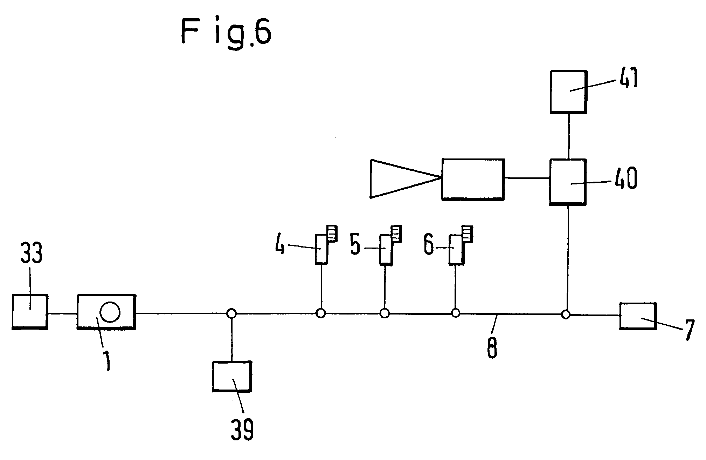

In dem in Figur 6 dargestellten Steuersystem für Kameraobjektive sind zusätzlich zu der Konfiguration der Figur 1 ein Speichermodul 33, ein Steuerrechner 39 und eine Koppeleinheit 40 zwischen dem Steuersystem und der Kamera vorgesehen. Die Koppeleinheit ist mit der Kamera und einem Kamerakontrollgerät 41 verbunden.

Das Speichermodul 33 ist als Erweiterungseinheit für die Handbedieneinheit 1 konzipiert und an der Zoom-Haupteinheit 2 über eine Plug-In-Einheit oder eine andere Anbaueinheit befestigt. Es stellt Bedienelemente und nicht flüchtigen Speicher für die Handbedieneinheit 1 zur Verfügung. Das Speichermodul 33 weist eine Steckaufnahme zur Aufnahme einer als Speichermedium dienenden Speicherkarte auf, die beliebig auswechselbar ist.

Bei Abfahren einer Aufnahmesituation werden die Istwerte der Winkelstellungen der einzelnenen Objektivringe 10, 11, 12 von den Mikroprozessoren 36 der entsprechenden Motoreinheiten 4, 5, 6 für die Zoom-, Focus- und Iris-Einstellung über den Bus 8 an den Mikroprozessor 24 der Handbedieneinheit 1 und von diesem über eine weitere Schnittstelle 32 kontinuierlich in das Speichermodul 33 eingelesen und in diesem abgelegt (vgl. auch Figur 3). Während der Aufzeichnung wird der normale Zoom- Focus- und Iris-Betrieb abgewickelt.

Die Speicherkapazität der Speicherkarten ist üblicherweise derart konzipiert, daß eine Speicherkarte nach etwa fünf Minuten voll ist. Beginn und Ende der Aufzeichnung werden über die Betätigung einer Speichertaste geregelt.

Die aufgezeichneten Daten betreffend die während der Aufnahme erfolgten Verstellverläufe der Zoom-, Focus- und Iriseinstellung oder auch mittels eines Rechners ermittelte oder modifizierte Verstellverläufe können durch Betätigung einer Wiedergabetaste aus dem Speichermodul 33 ausgelesen und den einzelnenen Motoreinheiten 4, 5, 6 zugeführt werden. Die entsprechenden Objektivringe 10, 11, 12 werden dabei in die Ausgangsstellung wie zu zu Beginn der Aufzeichnung gebracht und es werden nachfolgend alle Winkeleinstellungen in den selben Zeitintervallen wie zum Zeitpunkt der Aufzeichnung angefahren. Die Wiederholgenauigkeit bezüglich der Winkeleinstellung und des zeitlichen Verlaufs liegen dabei im Rahmen der Genauigkeit des Steuersystems.

Mit dem Speichermodul 33 können auch bestimmte Einstellungen betreffend die Aufnahmefrequenz, Brennweite, Entfernung, Blende, Bereichsgrenzen und Skalierung gespeichert werden. Dazu muß für Aufnahmefrequenz, Brennweite, Entfernung und Blende jeweils nur eine bestimmte Winkelstellung des Objektivringes 10, 11, 12 gespeichert werden. Die Werte für Bereichsgrenzen und Skalierung sind an der Handbedieneinheit 1 eingestellt und können von dieser an das Speichermodul 33 übergeben werden.

Durch Abrufen der gespeicherten Einstellwerte kann eine bestimmte Einzeleinstellung exakt reproduziert werden. Auch können auf diese Weise die Ausgangspositionen für aufgezeichnete Verstellverläufe präzise wiederhergestellt werden. Zum Speichern und Auslesen einzelner Einstellungen ist ein entsprechendes Bedienelement vorhanden.

Weiter sind im Speichermodul 33 Objektivkennwerte abgelegt, die aus dem Speichermodul 33 ausgelesen werden. Sie dienen zur Kompensation der unterschiedlichen Skalengravuren bei der Umrechnung von Drehwinkeln auf tatsächliche Objektivwerte sowie der Linearisierung von Blendenskalen bei Objektiven mit nichtlinearer Blendenskala.

Auch können während der Aufzeichung von Einstellwerten oder Verstellverläufen betreffend Zoom, Focus- und Iris nicht von den Motoreinheiten 4, 5, 6 übermittelten Istwerte eingelesen, sondern die entsprechenden Einstellungen an der Handbedieneinheit 1 durchgeführt und die Sollwerte der Handbedieneinheit 1 direkt vom Mikroprozessor 24 der Handbedieneinheit an das Speichermodul 33 weitergeleitet und in dieses eingelesen werden.

In einer alternativen Ausgestaltung des Ausführungsbeispieles ist es vorgesehen, daß neben den Verstellverläufen der Zoom-, Focus- und Iris-Einstellung auch die Verstellverläufe der Kameraposition betreffend Ort, Neigung und räumliche Orientierung der Objektivachse eingelesen werden. Entsprechend sind dabei am Stativkopf entsprechende Geberelemente vorgesehen und über Schnittstellen mit dem Bus 8 verbunden. Auf diese Weise ist es möglich, alle Parameter eines Takes einschließlich Kamerafahrt und räumlicher Orientierung der Objektivachse aufzuzeichnen und wiederzugeben.

Die in den Speicherkarten gespeicherten Daten können von einem Mikrocomputer für eine kostengünstige Langzeitarchivierung übernommen und zu gegebenem Zeitpunkt auf die Speicherkarten rückübertragen werden.

In das Steuersystem sind gemäß Figur 6 neben der Speicherkarte der Steuerrechner 39 sowie die Koppeleinheit 40 integriert. Diese Einheiten sind über Buskoppelschaltkreise an den Bus 8 angeschlossen.

Ebenso wie über die Speichermodule 33 können auch mittels des Steuerrechners 39 wie bereits erwähnt Einstellwerte und Verstellverläufe der Zoom-, Focus- und/oder Iris-Einstellungen aufgezeichnet und wiedergegeben werden. Die durch die Integration eines Steuer- und Regelteiles systemfähigen Motoreinheiten 4, 5, 6 sind dabei anstatt oder ergänzend zu der Handbedieneinheit 1 vom Steuerrechner 39 kontrollierbar. Entsprechend übernimmt der Mikroprozessor des Steuerrechners 39 die Kontrolle des gesamten Steuersystems.

Der Steuerrechner 39 dient des weiteren als übergeordnetes Steuer- und Kontrollgerät für die Koppeleinheit 40. Die Koppeleinheit 40 weist Schnittstellen mit Buskoppelschaltkreisen für die Kommunikation mit dem Bus 8, mit der Kamera und mit dem Kamerakontrollgerät 41 auf. Über die Schnittstelle mit der Kamera werden die aktuellen Werte der Kamera-Laufgeschwindigkeit und des Blendensektors der verstellbaren Umlaufblende eingelesen und an die Hauptkontrolleinheit des Steuersystems, also die Handbedieneinheit 1 oder den Steuerrechner 39 mitgeteilt. Umgekehrt werden gegebenenfalls vorprogrammierte und im Steuerrechner 39 gespeicherte Sollwerte der Kamera-Laufgeschwindigkeit und des Blendenöffnungswinkels von der Koppeleinheit 40 eingelesen und an die Kamera weitergeleitet.

Unter Berücksichtigung der Kamera-Laufgeschwindigkeit bzw. Aufnahmefrequenz und des Blendenöffnungswinkels erfolgt gegebenenfalls eine Kopplung der Irisblende und der verstellbaren Spiegelblende. Durch eine synchrone Verstellung von Irisblende und Blendensektor wird eine Veränderung der Schärfentiefe bei konstanter Belichtung erzielt. Es ist ebenfalls möglich, die Kamera-Laufgeschwindigkeit bei konstant gehaltener oder variabler Belichtung bzw. bei konstant gehaltener Schärfentiefe zu ändern. Auch ist eine Veränderung des Blendensektors und der Irisblende beim Zoomen denkbar. Dies bewirkt ein Aufhellen bzw. Abdunkeln des Bildes und/oder eine Veränderung der Schärfentiefe.

Die entsprechende Sollwerte für die Iris-, Sektor- bzw. Zoom-Einstellung werden in der Koppeleinheit 40 oder wahlweise auch im angeschlossenen Steuerrechner 39 berechnet und an die Handbedieneinheit 1 bzw. direkt an die Motoreinheiten 4, 5, 6 übergeben.

Anfangswerte der Kamera-Laufgeschwindigkeit, des Blendensektors und der Irisblende sind an der Koppeleinheit 40 direkt einstellbar oder werden vom Kamerakontrollgerät 41 eingelesen. Eine digitale Anzeige zeigt die aktuellen Einstellwerte an. Weiter ist mit der Koppeleinheit 40 die Objektivkalibrierung aktivierbar. Dazu können vorprogrammierte Objektivkennwerte von einem integrierten Kennwertspeicher abgerufen oder über eine Chipspeicherkarte oder eine Infrarotschnittstelle eingelesen werden.

Der Betätigungsschalter für den Betrieb der Kamera ist über die Koppeleinheit 40 mit der Handbedieneinheit 1 verbunden, so daß die Kamera von den Handbedieneinheit 1 aus betrieben werden kann.

An den Bus 8 sind des weiteren über die Koppeleinheit 40 oder eigene Schnittstellen eine in Figur 6 nicht dargestellte Anzeigeeinheit zur Anzeige aktueller Einstellwerte und/oder Bereichsgrenzen in alphanumerischer oder Bar-Graph-Form und eine Video-Dateneinblendeinheit zur Darstellung aktueller Einstellwerte auf einem Sucher-Monitorbild angeschlossen. Gegebenenfalls ist die Anzeigeeinheit in die Koppeleinheit 40 integriert.

In einem anderen Ausführungsbeispiel dient die Koppeleinheit 40 als übergeordnete Steuer- und Regeleinheit sowohl für die Kamerakontrolleinheit 41 als auch das LCU-Steuersystem und ist dabei bevorzugt in die Handbedieneinheit 1 integriert. Die Handbedieneinheit 1 steuert und überwacht dann nicht nur die Zoom-, Focus- und Iris-Einstellung, sondern auch die Funktionen des Kamerakontrollgerätes 41 und der Kamera, wobei insbesondere eine Kopplung der Einstellung von Kamera-Laufgeschwindigkeit, Blendenöffnung der Umlaufblende, Brennweite, Schärfe und Irisblende durchgeführt wird.

Die Erfindung beschränkt sich in ihrer Ausführung nicht auf die vorstehend angegebenen bevorzugten Ausführungsbeispiele. Vielmehr ist eine Vielzahl von Varianten denkbar, welche von dem erfindungsgemäßen Steuersystem auch bei grundsätzlich anders gearteten Ausführungen Gebrauch machen.

## Patentansprüche

1. Steuersystem für eine Kamera, insbesondere für Kamera-funktionen wie Einstellung der Sektorenblendenöffnung und der Bildfrequenz sowie für Kameraobjektive mit Motoreinheiten zur Zoom- (Brennweiten), Focus- (Schärfen) und/oder (Iris) Blendeneinstellung und mindestens einer mit der Motoreinheit bzw. den Motoreinheiten elektrisch verbundenen Handbedieneinheit zur Abgabe von Positions- und/oder Geschwindigkeitssollwerten,
**dadurch gekennzeichnet,** daß
a) in der Motoreinheit bzw. den Motoreinheiten (4, 5, 6) ein Steuer- und Regelteil (36) mit einem Positionsgeber (33) und/oder einem Geschwindigkeitsgeber integriert ist,
b) an der Handbedieneinheit (1) sowohl Einstellwerte als auch Bereichsgrenzen elektronisch einstellbar sind,
c) die Motoreinheit bzw. die Motoreinheiten (4, 5, 6) und die Handbedieneinheit (1) einen digitalen Dateneingang und Datenausgang aufweisen und
d) die Motoreinheit bzw. die Motoreinheiten (4, 5, 6) und die Handbedieneinheit (1) über einen seriellen Steuer- und Datenbus (8) miteinander verbunden sind, wobei derselbe Bus (8) die Handbedieneinheit (1) und die hintereinander angeordneten Motoreinheiten (4, 5, 6) verbindet.

2. Steuersystem nach Anspruch 1, **dadurch gekennzeichnet,** daß ein Stromversorgungsmodul (7), vorzugsweise der Kamera-Akkumulator, an den Bus (8) anschließbar ist.

3. Steuersystem nach Anspruch 1 oder 2, **dadurch gekennzeichnet,** daß die Handbedieneinheit (1) mit einem Speichermodul (33) zur Aufzeichnung von Einstellwerten für die Brennweite, Entfernung, Blende, Bereichsgrenzen und Skalierung und/oder Verstellverläufen der Zoom-, Focus- und/oder Iris-Einstellungen verbindbar ist, in das wahlweise die Einstellwerte und/oder Verstellverläufe einlesbar oder aus dem aufgezeichnete oder mittels eines Rechners ermittelte Verläufe der Zoom-, Focus- und/oder Iris-Einstellungen für einen Wiedergabeablauf oder zur Wiederherstellung vorgemerkter Einstellungen auslesbar sind.

4. Steuersystem nach Anspruch 3, **dadurch gekennzeichnet,** daß das Speichermodul (33) eine Steckaufnahme zur Aufnahme einer als Speichermedium dienenden Speicherkarte aufweist.

5. Steuersystem nach mindestens einem der vorangehenden Ansprüche, **dadurch gekennzeichnet,** daß der Bus (8) eine Schnittstelle zum Anschluß eines Steuerrechners (39) und/oder von Erweiterungseinheiten für Belichtungsprogramme aufweist, insbesondere für
a) eine Koppeleinheit (40) zwischen Kamera und dem Steuersystem für Kameraobjektive zur Einbeziehung der Kamera-Laufgeschwindigkeit und des Blendensektors einer verstellbaren Umlaufblende der Kamera in die Objektivsteuerung, wobei vorzugsweise der Steuerrechner (39) als übergeordnetes Kontroll- und Bediengerät verwendbar ist,
b) eine Anzeigeeinheit zur Anzeige aktueller Einstellwerte und/oder Bereichsgrenzen in alphanumerischer oder Bar-Graph-Form und/oder
c) eine Video-Dateneinblendeinheit zur Darstellung aktueller Einstellwerte auf einem Sucher-Monitorbild.

6. Steuersystem nach mindestens einem der vorangehenden Ansprüche, **dadurch gekennzeichnet,** daß die Handbedieneinheit (1) aus einer Haupteinheit (2; 3) und einer oder mehreren Untereinheiten (3; 2) besteht.

7. Steuersystem nach Anspruch 6, **dadurch gekennzeichnet,** daß die Handbedieneinheit aus einer Zoom-Haupteinheit (2) zur steuerbaren Brennweitenveränderung über einen großen Geschwindigkeitsbereich mit Vorwahl des Geschwindigkeitsbereiches und Kalibrierfunktion sowie Focus-/Iris-Modulen (3) zur Positionierung des Schärfen-/Blenden-Ringes (10, 12) mit automatisch ablaufenden Kalibrierfunktionen und Bereichseingrenzungen besteht.

8. Steuersystem nach Anspruch 7, **dadurch gekennzeichnet,** daß die Focus-/Iris-Module (3) als Handradeinheiten mit jeweils einem Handrad (20) mit abnehmbaren Skalenscheiben und verschiebbaren Endanschlägen (21) ausgebildet sind und wahlweise über Erweiterungsstecker an die Zoom-Haupteinheit (2) ansteckbar oder über Kabel an die Zoom-Haupteinheit (2) anschließbar sind.

9. Steuersystem nach Anspruch 8, **dadurch gekennzeichnet,** daß die Bereichseingrenzung der Focus-/Iris-Module (3) wahlweise am entsprechenden Handrad (20) oder direkt am Objektiv einstellbar und an der entsprechenden Handradeinheit über Bedienungselemente (22) einspeicherbar ist.

10. Steuersystem nach Anspruch 8 oder 9, **dadurch gekennzeichnet,** daß jede Handradeinheit einen Handradwinkelgeber (25) aufweist, der in Abhängigkeit von der Stellung des Handrades (20) Sollwerte für die Focus-/Iris-Einstellungen abgibt.

11. Steuersystem nach mindestens einem der Ansprüche 7 bis 10, **dadurch gekennzeichnet,** daß die Zoom-Haupteinheit (2) ein Zoom-Geschwindigkeitsstellelement (15) und einen als Geberelement dienenden Abstandssensor (29) aufweist, der in Abhängigkeit von der Stellung des Zoom-Geschwindigkeitsstellelementes (15) Sollwerte für die Zoom-Einstellung abgibt.

12. Steuersystem nach mindestens einem der Ansprüche 7 bis 11, **dadurch gekennzeichnet,** daß in die Zoom-Haupteinheit (2) ein Mikroprozessor (24) integriert ist, der über einen Analog/Digital Wandler (27) die Signale der Handradwinkelgeber (25) sowie des Zoom-Geschwindigkeitsstellelementes (15) einliest, aus diesen Signalen digitale Sollwerte für die Zoom-, Focus- und/oder Iris-Einstellungungen bestimmt und der über eine serielle Schnittstelle (31) mit Buskoppelschaltkreisen mit dem Bus (8) verbunden ist.

13. Steuersystem nach Anspruch 3 und 12, **dadurch gekennzeichnet,** daß der Mikroprozessor (24) der Zoom-Haupteinheit (2) über eine Schnittstelle (32) mit einem Speichermodul (33) verbindbar ist, wobei während der Aufzeichung von Einstellwerten oder Verstellverläufen die entsprechenden Istwerte vom Mikroprozessor (24) eingelesen und dem Speichermodul (33) zugeführt werden.

14. Steuersystem nach Anspruch 3 und 12, **dadurch gekennzeichnet,** daß der Mikroprozessor (24) über eine Schnittstelle (32) mit dem Speichermodul (33) verbindbar ist, wobei während der Aufzeichung von Einstellwerten oder Verstellverläufen die Sollwerte der Handbedieneinheit (1) vom Mikroprozessor (24) direkt dem Speichermodul (33) zugeführt werden.

15. Steuersystem nach mindestens einem der Ansprüche 3, 12, 13, 14, **dadurch gekennzeichnet,** daß im Speichermodul (33) Objektivkennwerte abgelegt sind, die über die Schnittstelle (32) vom Mikroprozessor (24) einlesbar sind.

16. Steuersystem nach mindestens einem der Ansprüche 7 bis 15, **dadurch gekennzeichnet,** daß die Zoom-Haupteinheit (2) und die Focus-/Iris-Module (3) elektronische Anzeigen zur Anzeige der Sollwerte für die Motoreinheiten (4, 5, 6) und/oder der aktuellen Bereichsgrenzen aufweisen.

17. Steuersystem nach mindestens einem der vorangehenden Ansprüche, **dadurch gekennzeichnet,** daß jede Motoreinheit (4, 5, 6) einen Antriebsmotor (32), einen Positionsgeber (33) und/oder einen Geschwindigkeitsgeber, ein Steuer- und Regelteil (36) mit automatisch ablaufenden Überwachungsfunktionen und eine serielle Schnittstelle aufweist, wobei das Steuer- und Regelteil (36) die über die serielle Schnittstelle aufgenommenen Sollwerte für die Zoom- bzw. Focus- bzw. Iris-Einstellungen mit den entsprechenden Istwerten des Positionsgebers (33) vergleicht und an den Antriebsmotor (32) entsprechend Steuersignale abgibt.

18. Steuersystem nach Anspruch 17, **dadurch gekennzeichnet,** daß der Positionsgeber (33) mit einem Positionszähler (35) verbunden ist, der die Signale des Positionsgebers (33) auswertet und an das Steuer- und Regelteil (36) leitet.

19. Steuersystem nach Anspruch 17 oder 18, **dadurch gekennzeichnet,** daß die Motoreinheit bzw. die Motoreinheiten (4, 5, 6) vertikal zur Achse des Kameraobjektives (9) angeordnet sind.

20. Steuersystem nach mindestens einem der Ansprüche 17 bis 19, **dadurch gekennzeichnet,** daß jede Motoreinheit (4, 5, 6) wahlweise zur Einstellung der Brennweite, der Entfernung oder der Blende einsetzbar ist, wobei der entsprechende Modus an einem Bedienungselement (23) der Motoreinheit (4, 5, 6) einstellbar ist.

21. Steuersystem nach mindestens einem der vorangehenden Ansprüche, **dadurch gekennzeichnet,** daß die über den LCU-Bus (8) übertragenen Daten datenredundant codiert sind.

22. Steuersystem nach mindestens einem der vorangehenden Ansprüche, **dadurch gekennzeichnet,** daß die Handbedieneinheit (1) bzw. ein übergeordnetes Kontroll- und Bediengerät (39) eine Funktion aufweist, durch welche bei Stillstand der Kamera der Objektivring (12) für die Iris-Einstellung derart positioniert wird, daß die Irisblende vollständig geöffnet ist.
